# FASCICULE DE BREVET EUROPEEN

(11) **EP 0 530 070 B1**
(45) Date de publication et mention de la délivrance du brevet: **22.12.1993**
(21) Numéro de dépôt: 92402214.8
(22) Date de dépôt: 03.08.1992
(51) Int. Cl.: E05C 19/06, F17C 3/08

(54) **Panier de rangement de boitiers individuels et conteneur cryogénique**
Speicherrahmen für Laden und Tieftemperaturbehälter
Storage frame for boxes and cryogenic container

(30) Priorité: 30.08.1991 FR 9110781
(43) Date de publication de la demande: 03.03.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Delatte, Daniel, F-94100 Saint Maur (FR)
(74) Mandataire: Le Moenner, Gabriel

(56) Documents cités:
- US-A- 1 765 072
- US-A- 4 211 441

## Description

La présente invention concerne les paniers de rangement de boîtiers individuels, notamment de tiroirs dits "cryoplastiques", du type comprenant un corps allongé vertical à section transversale sensiblement en forme de U avec une face d'accès pour l'introduction des boîtiers, une pluralité d'éléments de cloisons transversales pour supporter les boîtiers, et des moyens, actionnables manuellement, de verrouillage des boîtiers en position dans le panier.

Des paniers de ce type sont utilisés notamment dans des conteneurs cryogéniques ou cryoconservateurs pour le stockage à très basse température, dans un fluide cryogénique, de produits biologiques. Les moyens de verrouillage sont le plus souvent constitués d'une broche enfilable dans une série de trous alignés formés dans les cloisons transversales de façon à s'étendre, en configuration de verrouillage, devant les faces avant des tiroirs disposés dans le panier. Cet agencement présente les inconvénients de devoir ménager des cloisons transversales pontant la face d'accès, d'y réaliser des trous parfaitement alignés et de présenter des difficultés d'enfilage de la broche dans les différents trous, notamment dans les cloisons transversales les plus basses du panier. On a également proposé des moyens de verrouillage individuels pour chaque panier, constitués d'une anse montée articulée par ses extrémités dans les parois latérales du boîtier et déplaçable entre une position basse, où l'anse s'étend devant la face avant d'un tiroir et une position relevée libérant le passage du tiroir par la face d'accès. Cet agencement présente toutefois l'inconvénient de ne pas présenter de position stable ou bloquée en configuration de verrouillage ou de déverrouillage et de devoir occuper de ce fait les deux mains d'un utilisateur.

La présente invention a pour objet de proposer un nouvel agencement de panier comportant des moyens de verrouillage perfectionnés, de structure simple et fiable et de faibles coûts de revient et d'assemblage, garantissant le maintien d'un tiroir en position de verrouillage, avec application sur le tiroir d'une force élastique, et occupant une position de déverrouillage stable.

Pour ce faire, selon une caractéristique de l'invention, les moyens de verrouillage sont constitués par des verrous individuels comportant une partie principale et une partie d'extrémité montée à pivotement autour d'un axe sensiblement vertical sur une partie latérale du corps, et déplaçable, à l'encontre d'un effort élastique, entre une position de verrouillage, où la partie principale s'étend devant la face d'accès, et une position de déverrouillage stable libérant la face d'accès.

Selon une autre caractéristique de l'invention, la partie d'extrémité de chaque verrou est constituée de deux pattes en fil métallique divergeant vers l'extérieur en formant chacune, en position de repos, un premier angle par rapport à la verticale, la partie latérale du corps comportant deux logements recevant les pattes et formant chacune, avec la verticale, un deuxième angle dans un sens opposé à celui du premier angle de la patte correspondante.

Selon d'autres caractéristiques plus particulières de l'invention, l'ensemble du verrou est réalisé à partir d'un fil métallique élastique et le corps est obtenu par découpe et conformation d'un flan métallique, les logements pour les pattes de verrou étant formées par un bord de flan rabattu extérieurement sur une face latérale du corps.

La présente invention a également pour objet un conteneur cryogénique comprenant au moins un panier selon l'invention, muni d'un moyen d'accrochage dans l'ouverture d'accès du conteneur.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique partielle en perspective d'un panier de rangement selon l'invention ;
- la figure 2 est une vue en plan d'un verrou selon l'invention ;
- la figure 3 est une vue en élévation du verrou de la figure 2 ;
- la figure 4 est une vue agrandie d'un bord de panier montrant les logements d'articulation pour un verrou selon les figures 2 et 3 ;
- la figure 5 est une vue en coupe transversale suivant le plan V-V de la figure 4 ; et
- la figure 6 est une vue schématique en coupe longitudinale d'un conteneur cryogénique renfermant des paniers selon l'invention.

Dans la description qui va suivre et sur les dessins, les éléments identiques ou analogues portent les mêmes chiffres de référence.

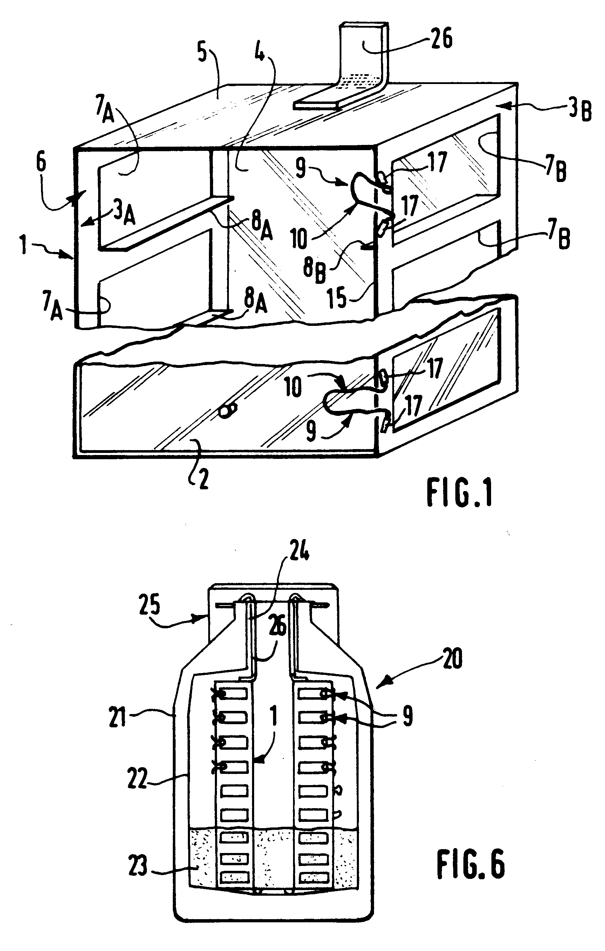

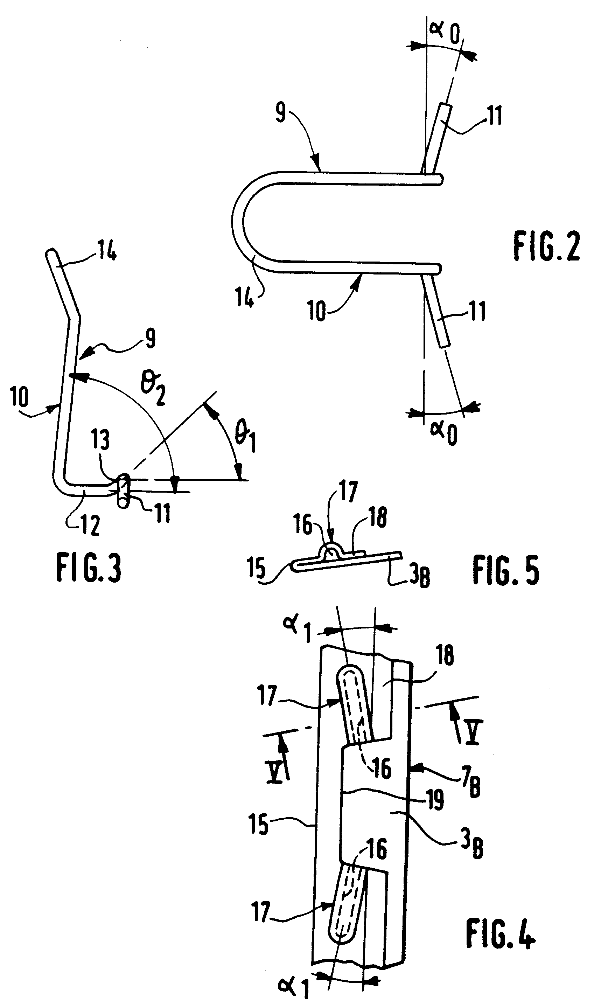

Sur la figure 1, on a représenté un panier ou rack 1 de rangement de boîtiers individuels parallélépipédiques 2. Le panier est avantageusement réalisé par découpe et conformation d'un flan métallique, par exemple en acier inoxydable, de façon à présenter la forme d'un corps allongé vertical à section transversale sensiblement en forme de U, avec des ailes latérales 3A, 3B, un fond vertical 4, une paroi d'extrémité supérieure 5 et une paroi d'extrémité inférieure définissant ainsi un volume interne accessible par une face d'accès avant 6. Les parois latérales 3A et 3B sont formées avec une série de découpes 7A, 7B, une partie du voile de chaque découpe 7 étant rabattue intérieurement pour former une pluralité d'éléments de cloisons transversales horizontales en vis-à-vis 8A, 8B, pour supporter les différents boîtiers 2, réalisés par exemple en polyamide.

Selon un aspect de l'invention, les moyens de verrouillage en position des boîtiers 2 dans le panier 1 comportent, pour chaque logement de boîtier 2, au moins un verrou 9 monté sur une paroi latérale 3B de façon à pivoter autour d'un axe sensiblement vertical entre une configuration de déverrouillage représentée sur le haut de la figure 1 et une position de verrouillage représentée sur le bas de la figure 1.

Comme on le voit mieux sur les figures 2 à 5, chaque verrou 9, avantageusement réalisé à partir d'un fil métallique élastique de diamètre de l'ordre de 1,8 mm, comporte une partie principale 10, destinée, en configuration de verrouillage, à venir s'étendre dans la face d'accès, et une partie d'extrémité ou de montage constituée de deux pattes d'extrémités 11 s'étendant dans un même plan et divergeant vers l'extérieur par rapport à la partie principale 10 en formant chacune, en position de repos, un angle α₀ par rapport à la verticale, typiquement de l'ordre de 15°. De façon plus spécifique, la partie principale 10 présente une forme en U et se raccord aux pattes 11 par une première portion transversale 12 orthogonale au plan des pattes 11 et une seconde portion 13 s'étendant à rebours, dans la direction vers la partie principale 10, en formant avec la première portion 12 un angle ϑ₁ d'environ 45°. Pour garantir un contact élastique du verrou 9 contre le tiroir en position de verrouillage, la partie principale 10 forme avec la portion transversale 12 un angle ϑ₂ inférieur à 90°, par exemple entre 80 et 85°. De même, pour faciliter l'actionnement du verrou, la partie principale 10 comporte une extrémité libre 12 décalée angulairement vers l'extérieur par rapport au plan principal de la partie principale 10.

L'aile latérale 3B comporte, au voisinage de son bord avant 15 délimitant la face d'accès 6, deux logements 16 pour recevoir les pattes 11. Selon un aspect de l'invention, chaque logement 16 s'étend dans une direction formant avec la verticale un angle α₁ dans le sens opposé à l'angle α₀ de la patte correspondante, l'angle α₁ étant typiquement d'environ 10° pour un angle α₀ d'environ 15°. De cette façon, les pattes 11 sont engagées à force dans les logements 16 où elles tourillonnent également à force, grâce à leur élasticité, le pivotement du verrou s'effectuant autour d'un axe sensiblement vertical en vainquant, dans l'un ou l'autre sens, un effort élastique dû à la torsion des pattes dans les logements 16, de sorte que le verrou est maintenu de façon stable en position de déverrouillage et est maintenu également de façon stable en position de verrouillage à vide soit, du fait de la configuration de la partie principale 10, en exerçant sur le tiroir adjacent une force élastique en position de verrouillage active.

Selon un aspect de l'invention, comme représenté sur les figures 4 et 5, les logements 16 sont constitués par une partie conformée sensiblement cylindrique 17 d'un bord de flan 18 rabattu extérieurement sur l'aile latérale 3B, laquelle comporte localement une découpe 19 pour la mise en place d'un outil de conformage des logements 16 lors du pressage du bord rabattu 18 sur l'aile latérale 3B, en l'occurrence un V en fil métallique de diamètre légèrement supérieur à celui du verrou 9.

On a représenté sur la figure 6 un conteneur cryogénique ou cryoconservateur 20 constitué, de façon classique, d'une enveloppe externe 21 et d'une enveloppe interne 22 destinée à contenir un fluide cryogénique 23, par exemple de l'azote liquide. L'enveloppe interne 22 comporte un col 24 débouchant vers l'extérieur et obturable par un capuchon 25. Pour la manutention et la mise en place dans le conteneur 20 des paniers 1, chacun de ces derniers comporte, à sa partie supérieure, un organe de manutention et de maintien 26 permettant son accrochage sur l'extrémité supérieure du col 24, à l'intérieur du capuchon 25.

Quoique la présente invention ait été décrite en relation avec un mode de réalisation particulier, elle ne s'en trouve pas limitée pour autant mais est au contraire susceptible de modifications et de variantes qui apparaîtront à l'homme de l'art.

## Revendications

1. Panier de rangement de boîtiers individuels comprenant un corps (1) allongé vertical à section transversale sensiblement en forme de U, avec une face d'accès (6), une pluralité d'éléments de cloisons transversales horizontales (8A, 8B) pour supporter les boîtiers (2), et des moyens, actionnables manuellement, de verrouillage des boîtiers en position dans le panier, caractérisé en ce que les moyens de verrouillage sont constitués par des verrous (9) comportant chacun une partie principale (10) et une partie d'extrémité (11) montée à pivotement autour d'un axe sensiblement vertical sur une partie latérale (3B) du corps, et déplaçables, à l'encontre d'un effort élastique, entre une position de verrouillage, où la partie principale (10) s'étend dans la face d'accès (6), et une position de déverrouillage stable libérant la face d'accès.

2. Panier selon la revendication 1, caractérisé en ce que la partie d'extrémité de chaque verrou (9) est constituée de deux pattes en fil métallique (11) divergeant vers l'extérieur en formant chacune, en position de repos, un premier angle (α₀) par rapport à la verticale, la partie latérale (3B) du corps (1) comportant deux logements (16) recevant les pattes (11) et formant chacun, avec la verticale, un deuxième angle (α₁) dans le sens opposé à celui du premier angle (x₀) de la patte correspondante (11).

3. Panier selon la revendication 2, caractérisé en ce que le premier angle (α₀) est d'environ 15°, et en ce que le deuxième angle (α₁) est d'environ 10°.

4. Panier selon la revendication 2 ou la revendication 3, caractérisé en ce que l'ensemble du verrou (9) est réalisé à partir d'un fil métallique élastique.

5. Panier selon l'une des revendications 2 à 4, caractérisé en ce que le corps (1) est réalisé par découpe et conformation d'un flan métallique, les logements (17) étant formés par un bord de flan (18) rabattu extérieurement sur une face latérale (3B) du corps (1).

6. Panier selon la revendication 5, caractérisé en ce que le logement (16) est réalisé par conformage local (17) du bord rabattu (18).

7. Panier selon l'une des revendications précédentes, caractérisé en ce que les éléments de cloisons transversales (8A, 8B) sont formés par des zones rabattues des ailes latérales (3A, 3B) du corps (1).

8. Conteneur cryogénique, caractérisé en ce qu'il comprend au moins un panier (1) selon l'une des revendications précédentes, muni d'un moyen (26) d'accrochage dans l'ouverture d'accès (24) du conteneur (20).

## Patentansprüche

1. Aufnahmerahmen für Einzelbehälter, mit einem im Hochformat stehenden Körper (1) im wesentlichen U-förmigem Querschnitts, mit einer Zugangsseite (6), einer Vielzahl von transversalen horizontalen Zwischenwandelementen (8A, 8B) zur Unterstützung der Behälter (2), und mit von Hand betätigbaren Vorrichtungen zum Verriegeln der Behälter an ihrem Platz in dem Aufnahmerahmen, dadurch gekennzeichnet, daß die Verriegelungsvorrichtungen aus Verschlüssen (9) bestehen, die jeweils einen Hauptabschnitt (10) und einen um eine im wesentlichen vertikale Achse an einem Seitenteil (3B) des Körpers drehbar angelenkten Endabschnitt (11) aufweisen und gegen eine elastische Kraft zwischen einer Verriegelungsstellung, bei der sich der Hauptabschnitt (10) in die Zugangsseite (6) erstreckt, und einer stabilen, die Zugangsseite freigebenden Entriegelungsstellung verstellbar sind.

2. Aufnahmerahmen nach Anspruch 1, dadurch gekennzeichnet, daß der Endabschnitt jedes Verschlusses (9) aus zwei Drahtklammern (11) besteht, die nach außen divergieren und jeweils in Ruhestellung einen ersten Winkel (α₀) mit der Vertikalen einschließen, wobei das Seitenteil (3B) des Körpers (1) zwei Aufnahmen (16) aufweist, die die Klammern (11) aufnehmen und jeweils mit der Vertikalen einen zweiten Winkel (α₁) in der zum ersten Winkel (α₀) der entsprechenden Klammer (11) entgegengesetzten Richtung einschließen.

3. Aufnahmerahmen nach Anspruch 2, dadurch gekennzeichnet, daß der erste Winkel (α₀) ungefähr 15° und der zweite Winkel (α₁) ungefähr 10° beträgt.

4. Aufnahmerahmen nach Anspruch 2 oder 3, dadurch gekennzeichnet, daß die Verschlußanordnung (9) aus einem elastischen Draht hergestellt ist.

5. Aufnahmerahmen nach einem der Ansprüche 2 bis 4, dadurch gekennzeichnet, daß der Körper (1) durch Zuschneiden und Formen einer Metallplatte hergestellt ist, wobei die Aufnahmen (17) von einem nach außen auf eine Seitenfläche (3B) des Körpers (1) umgebogenen Plattenrand (18) gebildet werden.

6. Aufnahmerahmen nach Anspruch 5, dadurch gekennzeichnet, daß die Aufnahme (16) durch eine örtliche Verformung (17) des umgebogenen Randes (18) hergestellt ist.

7. Aufnahmerahmen nach einem der vorhergehenden Ansprüche, dadurch gekennzeichnet, daß die transversalen Zwischenwandelemente (8A, 8B) aus umgebogenen Bereichen von Seitenschenkeln (3A, 3B) des Körpers (1) bestehen.

8. Tieftemperaturbehälter, dadurch gekennzeichnet, daß er mindestens einen Aufnahmerahmen (1) nach einem der vorhergehenden Ansprüche enthält, der mit einer Einrichtung (26) zum Einhängen in die Zugangsöffnung (24) des Behälters (20) versehen ist.

## Claims

1. Frame for storage of individual boxes comprising a vertical elongate body (1) of substantially U-shaped cross-section with an access face (6), a plurality of horizontal transverse partition members (8A, 8B) for supporting the boxes (2), and means, capable of manual operation, for locking the boxes in position in the frame, characterised in that the locking means are constituted by locks (9) each comprising a main part (10) and an end part (11) mounted pivoting about a substantially vertical axis on a lateral part (3B) of the body, and movable, against a resilient force, between a locking position, where the main part (10) extends into the access face (6), and a stable unlocking position freeing the access face.

2. Frame according to Claim 1, characterised in that the end part of each lock (9) is constituted by two outwardly divergent tongues of metal wire (11) each forming, in rest position, a first angle (α₀) with respect to the vertical, the lateral part (3B) of the body (1) comprising two housings (16) receiving the tongues (11) and each forming, with the vertical, a second angle (α₁) in the direction opposite to that of the first angle (x₀) of the corresponding tongue (11).

3. Frame according to Claim 2, characterised in that the first angle (α₀) is of approximately 15° and in that the second angle (α₁) is of approximately 10°.

4. Frame according to Claim 2 or Claim 3, characterised in that the whole of the lock (9) is constructed from a resilient metal wire.

5. Frame according to any of Claims 2 to 4, characterised in that the body (1) is constructed by cutting out and shaping a metal blank, the housings (17) being formed by an edge of blank (18) turned back outwardly onto a lateral face (3B) of the body (1).

6. Frame according to Claim 5, characterised in that the housing (16) is constructed by local shaping (17) of the turned back edge (18).

7. Frame according to any of the preceding claims, characterised in that the transverse partition members (8A, 8B) are formed by turned back zones of the lateral wings (3A, 3B) of the body (1).

8. Cryogenic container, characterised in that it comprises at least one frame (1) according to any of the preceding claims, fitted with a means (26) for hooking in the access aperture (24) of the container (20).
